# EUROPÄISCHE PATENTSCHRIFT

(11) **EP 2 716 189 B1**
(45) Veröffentlichungstag und Bekanntmachung des Hinweises auf die Patenterteilung: **15.04.2015**
(21) Anmeldenummer: 13401104.8
(22) Anmeldetag: 17.09.2013
(51) Int. Cl.: A47J 31/44

(54) **Getränkeautomat**
Beverage dispenser
Distributeur de boissons

(30) Priorität: 05.10.2012 DE 102012109476
(43) Veröffentlichungstag der Anmeldung: 09.04.2014
(73) Patentinhaber: Miele & Cie. KG, 33332 Gütersloh (DE)
(72) Erfinder: Beier, Dominic, 33332 Gütersloh (DE); Lind, Martin, 33397 Rietberg (DE); Stegemann, Thomas, 48369 Saerbeck (DE)

(56) Entgegenhaltungen:
- EP-A1- 1 745 726
- DE-A1- 2 450 059
- DE-A1- 3 039 475
- DE-A1-102004 050 365

## Beschreibung

Die Erfindung betrifft einen Getränkeautomaten mit einer automatisch in der Höhe verstellbaren Ausgabeeinheit, unter der ein zur Befüllung mit einem in dem Getränkeautomaten erzeugten Getränk geeignetes Gefäß abstellbar ist, wie er beispielsweise in der DE 10 2004 050 365 A1 beschrieben ist. Die in dieser Druckschrift genannten Sensoren dienen der Erkennung der Höhe eines unter der Ausgabeeinheit abgestellten Gefäßes und steuern über das dadurch erzeugte Signal den Antrieb der Ausgabeeinheit, so dass der Antrieb kurz vor Erreichen des Gefäßrandes abgeschaltet wird, wodurch infolge des geringen Abstandes zwischen Ausgabeeinheit und Gefäß ein Verspritzen des in das Gefäß einzubringenden Getränkes vermieden werden kann. Darüber hinaus ist mit den offenbarten Sensoren eine Füllstandserkennung des in das Gefäß gefüllten Getränkes möglich. Als Beispiele für die zum Einsatz kommenden Sensoren sind in der Druckschrift Näherungssensoren, wie Ultraschallsensoren genannt. Darüber hinaus wird in der DE 10 2004 050 365 A1 auch der Einsatz eines Infrarotsensors beschrieben. Die Sensoren können zudem in einer Sensorleiste zusammengefasst sein, so dass damit eine Messeinrichtung gebildet wird. Insgesamt ist diese Lösung jedoch sehr komplex und die vorgestellten Sensoren sind zudem kostenintensiv und erfordern eine aufwändige Elektronik, weshalb ihr Einsatz mit Nachteilen behaftet ist.

Aus der EP 1 745 726 B1 geht darüber hinaus eine Laserannäherungs- oder Reflexanordnung beziehungsweise eine Lichtschranke in Form einer Sensoranordnung hervor, wobei die hierbei verwendeten Sensoren ebenfalls kostenintensiv und baulich aufwändig sind. Insbesondere die Lichtschranke erfordert einen erheblichen Bauraum, da ein oder mehrere Gefäße von der Lichtschranke erfasst werden müssen und damit der Abstand zwischen Sender und Empfänger relativ groß sein muss, was in dem Getränkeautomaten insgesamt sehr viel Platz einnimmt.

Aus der DE 24 50 059 A1 ist ein Entsafter bekannt, bei dem mittels eines Druckschalters das Vorhandensein eines Gefäßes erkannt wird, wobei mittels des Druckschalters das Gerät eingeschaltet wird. Aus der DE 30 39 475 A1 ist ein Laborgerät bekannt, bei dem mittels Drucklufterfassung die Eintauchtiefe von Kanülen in Proben gesteuert wird.

Der Erfindung stellt sich somit das Problem, einen Getränkeautomaten bereitzustellen, bei dem auf einfache Weise eine Detektierung eines unter der automatisch verstellbaren Ausgabeeinheit abgestellten Gefäßes möglich ist. Erfindungsgemäß wird dieses Problem durch einen Getränkeautomaten mit den Merkmalen des Patentanspruches 1 gelöst.

Vorteilhafte Ausgestaltungen und Weiterbildungen der Erfindung ergeben sich aus den nachfolgenden Unteransprüchen.

Ein Getränkeautomat mit einer automatisch in der Höhe verstellbaren Ausgabeeinheit, unter der wenigstens ein zur Befüllung mit einem in dem Getränkeautomaten erzeugten Getränk geeignetes Gefäß abstellbar ist, wurde erfindungsgemäß dahingehend weitergebildet, dass der Getränkeautomat eine Druckluftausgabeeinrichtung zur gerichteten Abgabe eines mittels einer Drucklufterzeugungsvorrichtung erzeugten Luftstrahls aufweist, wobei der Druck des Luftstrahls größer als der Umgebungsluftdruck ist und korrespondierend zu der Druckluftausgabeeinrichtung mindestens ein Messwertaufnehmer zur Erfassung einer während des Absenkens der Ausgabeeinheit von dem Luftstrahl erzeugten physikalischen Größe vorhanden ist.

Die mit der Erfindung erreichbaren Vorteile bestehen überwiegend darin, dass hier eine im Aufbau einfache und damit kostengünstige Möglichkeit bereitgestellt wurde, die Höhe wenigstens eines unter der Ausgabeeinheit abgestellten Gefäßes zu detektieren. Geht man beispielsweise von einem Getränkeautomaten zur Zubereitung von Kaffee aus, so ist hier zur Erzeugung des für die Kaffeezubereitung beziehungsweise für die Zubereitung von Kaffeemischgetränken erforderlichen Dampfes ohnehin mindestens eine Drucklufterzeugungsvorrichtung, wie beispielsweise eine Pumpe oder ein Kompressor, vorhanden, die problemlos für die erfindungsgemäßen Zwecke genutzt werden kann. Folglich sind in einem solchen Fall, abgesehen von den Messwertaufnehmern, keine zusätzlichen Aggregate erforderlich, um die Lösung umzusetzen.

Eine erste Ausgestaltung der Erfindung besteht darin, dass die durch den Messwertaufnehmer erfasste physikalische Größe ein Druck, eine Temperatur, eine Geschwindigkeit oder ein Impuls ist. So kann entsprechend diesem Vorschlag sowohl die physikalische Größe selbst, als auch ihre durch den Einfluss des Luftstrahls bewirkte Änderung erfasst und steuerungstechnisch umgesetzt werden.

Verschiedene Möglichkeiten der Umsetzung werden darin gesehen, dass der Messwertaufnehmer beispielsweise zur Erfassung des durch Reflektion des Luftstrahls erzeugten Staudruckes, zur Erfassung der Unterbrechung des Luftstrahls, zur Erfassung einer Temperaturänderung durch den Luftstrahl oder zur Erfassung einer durch den Luftstrahl erzeugten Drehzahl geeignet ist.

Bei der Nutzung des Staudruckprinzips wird folglich die Rückwirkung eines Hindernisses vor der Druckluftausgabeeinrichtung auf den erzeugten Luftstrahl detektiert. Ein ungehindertes Ausströmen des Luftstrahles aus der Druckluftausgabeeinrichtung bewirkt einen geringen Druck im Bereich der Austrittsöffnung der Druckluftausgabeeinrichtung. Tritt der Luftstrahl jedoch in den Bereich eines Hindernisses, also beispielsweise eines Gefäßes, erhöht sich der Druck der Druckluftausgabeeinrichtung. Dieser Druckunterschied ist messbar und kann für die erfindungsgemäßen Zwecke genutzt werden.

Es ist auch vorstellbar, dass durch den mindestens einen Messwertaufnehmer permanent der Druck des von der Druckluftausgabeeinrichtung abgegebenen Luftstrahls erfasst wird, so dass die Unterbrechung des Luftstrahls durch ein Hindernis, wie ein zuvor bereits erwähntes Gefäß, zu einem starken Druckabfall im Bereich des Messwertaufnehmers führt, was ebenso für die erfindungsgemäßen Zwecke als Messwert genutzt werden kann. Hierbei kann wie in dem zuvor erwähnten Beispiel der Vergleich des jeweiligen Istwertes mit einem vorgegebenen Sollwert erfolgen, sodass sich eine Regelung umsetzen lässt.

Ähnlich würde auch das Prinzip der Impulsmessung erfolgen, wobei der durch den Luftstrahl erzeugte Impuls vom Messwertaufnehmer erfasst wird. Bei Anströmung des Gefäßes durch den Luftstrahl bleibt dieser Impuls aus oder wird in erheblichem Maße reduziert, so dass dieser Druckabfall ebenfalls messtechnisch erfassbar ist.

Eine weitere sehr einfache Variante, den erzeugten Luftstrahl beziehungsweise eine dadurch geänderte physikalische Größe zu messen, besteht darin, beispielsweise einen elektrischen Widerstand einzusetzen, dessen Erwärmung sich durch das Auftreffen des Luftstrahls ändert, wobei die Änderung erfasst werden kann oder bei Abdeckung des Luftstrahls durch das Gefäß ein entsprechendes Ausbleiben der Änderung des erwärmten Zustandes des Widerstandes bestimmbar ist.

Darüber hinaus besteht eine Lösungsmöglichkeit nach der Erfindung auch darin, durch den Luftstrahl eine Geschwindigkeitsmesseinrichtung zu betreiben, deren Drehzahl ein unmittelbares Maß für die Intensität des Luftstrahles ist. Wird dieser Luftstrahl durch das Gefäß verdeckt, ändert sich auch die Drehzahl der Messeinrichtung, so dass dadurch ein eindeutiges Messergebnis möglich wird.

Als Messwertaufnehmer wird beispielsweise ein Drucksensor, ein Strömungssensor, ein Temperatursensor, wie beispielsweise ein Thermoelement, ein Flügelrad oder eine Drehzahlmesseinrichtung vorgeschlagen. Diese Messwertaufnehmer sind handelsübliche, sehr einfach ausgeführte Bauelemente, die kostengünstig und in beliebigen Empfindlichkeiten erhältlich und für die erfindungsgemäßen Zwecke nutzbar sind.

Darüber hinaus ist es von besonderem Vorteil, wenn die Druckluftausgabeeinrichtung zusammen mit der Ausgabeeinheit in der Höhe verstellbar ausgeführt ist. Auf diese Weise entfällt eine zusätzliche Einrichtung zur Bewegung der Druckluftausgabeeinrichtung, was den Getränkeautomaten insgesamt vereinfacht.

Um ein genaues Abbild der sich bewegenden Druckluftausgabeeinrichtung und des von dieser abgegebenen Luftstrahls erzeugen zu können, geht eine Weiterbildung der Erfindung davon aus, dass eine Mehrzahl Messwertaufnehmer äquidistant zu der Druckluftausgabeeinrichtung angeordnet ist. Mit der Mehrzahl der Messwertaufnehmer wird folglich eine Art Matrix erzeugt, so dass die vom Luftstrahl geänderten physikalischen Größen über einen möglichst breiten Bereich oder sogar über eine Fläche verteilt erfassbar sind. Dabei können die Messwertaufnehmer folglich in der Höhe übereinander angeordnet sein oder ein in der Höhe und Breite verteiltes Messfeld bilden.

Da der durch die Drucklufterzeugungsvorrichtung erzeugte Luftstrahl für die erfindungsgemäßen Zwecke immer nur dann benötigt wird, wenn die Ausgabeeinheit bewegt wird und sich folglich unterhalb der Ausgabeeinheit ein Gefäß befindet, welches mit einem Getränk befüllt werden soll, wird weiterhin vorgeschlagen dass die Drucklufterzeugungsvorrichtung zusammen mit der Ausgabeeinheit aktivierbar ist. Diese Maßnahme stellt beispielsweise eine wesentliche Energieeinsparung dar.

Bei der Drucklufterzeugungsvorrichtung kann es sich um eine Pumpe oder einen Kompressor handeln. Diese Aggregate sind entweder schon in dem Getränkeautomaten vorhanden und werden lediglich zusätzlich für die erfindungsgemäßen Zwecke genutzt oder es wird eine separate Drucklufterzeugungsvorrichtung zum Einsatz gebracht. Beide Varianten sind möglich und liegen im Bereich der Erfindung, wobei es von Vorteil ist, wenn die vorhandene Druckluft auch dazu genutzt wird, die Ausgabeeinheit pneumatisch anzutreiben. Eine andere Lösung besteht darin, dass die Ausgabeeinheit in an sich bekannter Weise elektromotorisch verstellbar ist.

Der von der Drucklufterzeugungsvorrichtung erzeugte und mittels der Druckluftausgabeeinrichtung abgegebene Luftstrahl und korrespondierend hierzu der mindestens eine Messwertaufnehmer zur Erfassung einer während des Absenkens der Ausgabeeinheit von dem Luftstrahl erzeugten physikalischen Größe kann entsprechend einem weiterführenden Vorschlag nach der Erfindung auch dazu genutzt werden, unmittelbar den Füllstand des Gefäßes zu messen. In diesem Fall wird der erzeugte Luftstrahl während des Befüllens des Gefäßes mit einem Getränk unmittelbar in Richtung der einlaufenden Flüssigkeit gerichtet, während der Messwertaufnehmer die Veränderung der physikalischen Größe erfasst. Bei Erreichung eines vorgegebenen Füllstandes schaltet der Zulauf des Getränkes automatisch ab. Somit lässt sich die Funktionsvielfalt des Getränkeautomaten mit einfachen Mitteln weiter steigern und somit seine Wertigkeit und Anwenderfreundlichkeit insgesamt verbessern.

Die Erfindung wird nachfolgend anhand der beigefügten Zeichnungen näher erläutert. Die dargestellten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt
- Figur 1:: einen als Kaffeeautomaten ausgeführten Getränkeautomaten,
- Figur 2:: eine schematisch stark vereinfachte Darstellung des Staudruckprinzips,
- Figur 3:: eine schematisch stark vereinfachte Darstellung einer Möglichkeit der Detektierung eines Gefäßes mit Hilfe eines Luftstrahls,
- Figur 4:: eine schematisch stark vereinfachte Darstellung einer Detektierung des Füllstandes eines Gefäßes mit Hilfe eines Luftstrahls,
- Figur 5:: eine schematisch stark vereinfachte Darstellung einer anderen Möglichkeit der Detektierung eines Gefäßes mit Hilfe eines Luftstrahls,
- Figur 6:: eine weitere schematisch stark vereinfachte Darstellung einer Möglichkeit der Detektierung eines Gefäßes mit Hilfe eines Luftstrahls,
- Figur 7:: eine Sensorplatte mit mehreren in einer Reihe angeordneten Messwertaufnehmern und
- Figur 8:: eine Leiterkarte mit einem von Strom durchflossenen, sich erwärmenden Widerstand.

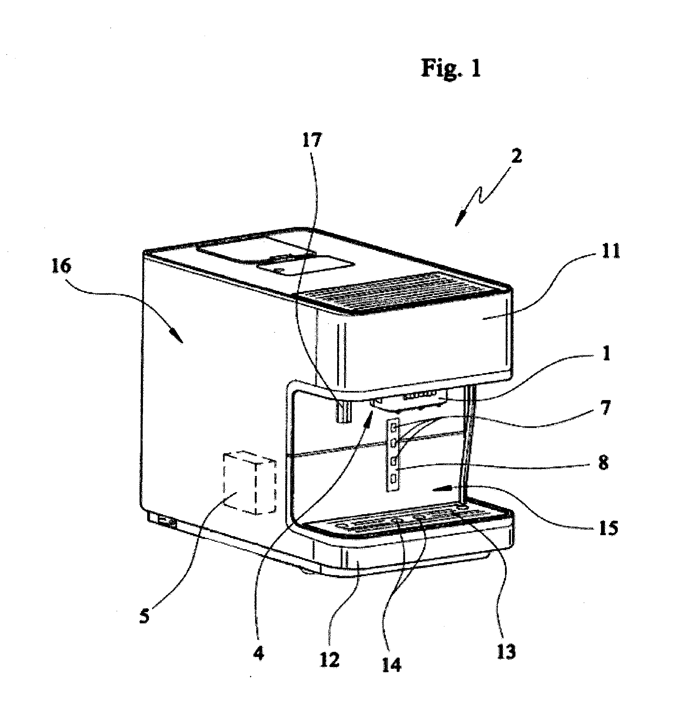

Bei dem in der Figur 1 gezeigten Getränkeautomat 2 handelt es sich um einen Kaffeeautomaten. Dieser Getränkeautomat 2 verfügt über eine Nische 15, die durch einen hervorstehenden Vorbau 11 und eine unterhalb des Vorbaus 11 vorhandene und analog zum Vorbau ebenfalls hervorstehende Abstellfläche 12 begrenzt wird. Die Abstellfläche ist dazu gedacht, ein in der Figur 1 nicht dargestelltes Gefäß 3 abzustellen. Hierfür weist die Abstellfläche 12 ein Abtropfblech 13 auf, das mit mehreren Öffnungen oder Schlitzen 14 ausgestattet ist, die dazu dienen, Resttropfen des Getränks in eine unterhalb des Abtropfbleches 13 angeordnete Abtropfschale abzuführen. Zur Befüllung eines derartigen Gefäßes mit einem in dem Getränkeautomaten 2 hergestellten Getränk dient eine Ausgabeeinheit 1, wobei es sich bei dem Getränk im vorliegenden Fall um ein Kaffeegetränk handelt. Die Besonderheit der Ausgabeeinheit 1 besteht darin, dass sie in ihrer Höhe verstellbar ausgeführt ist und diese Verstellbarkeit im vorliegenden Fall elektromotorisch, also automatisch, erfolgt. Die Verstellbarkeit der Ausgabeeinheit 1 ist deshalb von Vorteil, weil durch die Annäherung der Ausgabeeinheit 1 an das Gefäß bei der anschließenden Abgabe des Getränkes ein unerwünschtes Verspritzen des Getränkes vermieden werden kann. Da es jedoch Gefäße mit unterschiedlichen Höhen gibt, ist es notwendig, den Weg der Bewegung der Ausgabeeinheit 1 zu begrenzen. Was bei einer von Hand verstellbaren Ausgabeeinheit 1 problemlos manuell möglich ist, sollte bei einer automatisch verstellbaren Ausgabeeinheit 1 über eine Detektierung des Gefäßes erfolgen. Hierzu weist der Getränkeautomat 2 in seinem Innenraum und im vorliegenden Beispiel durch eine Seitenwand 16 abgedeckt eine Drucklufterzeugungsvorrichtung 5 auf, bei der es sich vorliegend um einen Kompressor handelt. Diese Drucklufterzeugungsvorrichtung 5 ist strömungsleitend mit einer im rückwärtigen Bereich der Ausgabeeinheit 1 angeordneten Druckluftausgabeeinrichtung 4 verbunden. Die Druckluftausgabeeinrichtung 4 erzeugt einen Luftstrahl, der in Richtung einer Sensorplatine 8 mit einer Vielzahl übereinander angeordneter Messwertaufnehmer 7 ausgerichtet ist. Bei dem in Figur 1 gezeigten Beispiel handelt es sich bei den Messwertaufnehmern 7 um Drucksensoren, die den vom Luftstrahl erzeugten Druck messen. Wird auf der Abstellfläche 12 ein Gefäß abgestellt und die Ausgabeeinheit 1 mit der Druckluftausgabeeinrichtung 4 nach unten, also in Richtung des Gefäßes bewegt, so erfassen die Messwertaufnehmer 7 der Sensorplatine 8 kontinuierlich den vom Luftstrahl erzeugten Druck, bis die Druckluftausgabeeinrichtung 4 durch einen Teil des Gefäßes abgedeckt wird, wodurch ein Druckabfall entsteht. Wird ein derartiger Druckabfall an einem der Messwertaufnehmer 7 erfasst, so stellt dies ein Signal zur Abschaltung des Antriebs der Ausgabeeinheit 1 dar, weil der Gefäßrand des Gefäßes erreicht ist.

Neben der Ausgabeeinheit 1 weist der in Figur 1 dargestellte Getränkeautomat 2 eine weitere Entnahmeeinrichtung 17 auf, bei der es sich vorliegend um eine Düse zur Abgabe von Wasserdampf handelt, wie er bei einem Kaffeeautomaten beispielsweise für die Erzeugung von Milchschaum benötigt wird.

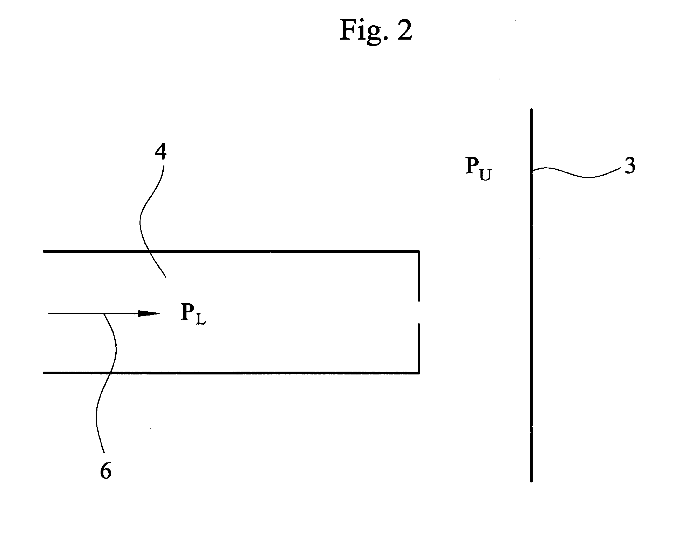

In der Figur 2 ist eine schematisch sehr stark vereinfachte Darstellung einer Möglichkeit eines Messprinzips nach der Erfindung dargestellt. Hierbei wird über eine Druckluftausgabeeinrichtung 4 ein Luftstrahl 6 mit einem konstanten Druck p_{L} erzeugt. Der Druck p_{L} ist dabei größer, als der Luftdruck der Umgebung p_{U}. Erfasst wird bei dieser Darstellung ein Staudruck, der durch die Rückwirkung eines Hindernisses, bei dem es sich vorliegend um ein Gefäß 3 handelt, entsteht. In dem Bereich oberhalb des Gefäßes 3 kann der Luftstrahl 6 mit einem geringen Druck p_{L} aus der Druckluftausgabeeinrichtung 4 entweichen, während der Druck im Bereich der Austrittsöffnung der Druckluftausgabeeinrichtung 4 erhöht wird, wenn diese in den Bereich des Hindernisses, beziehungsweise des Gefäßes 3 gelangt.

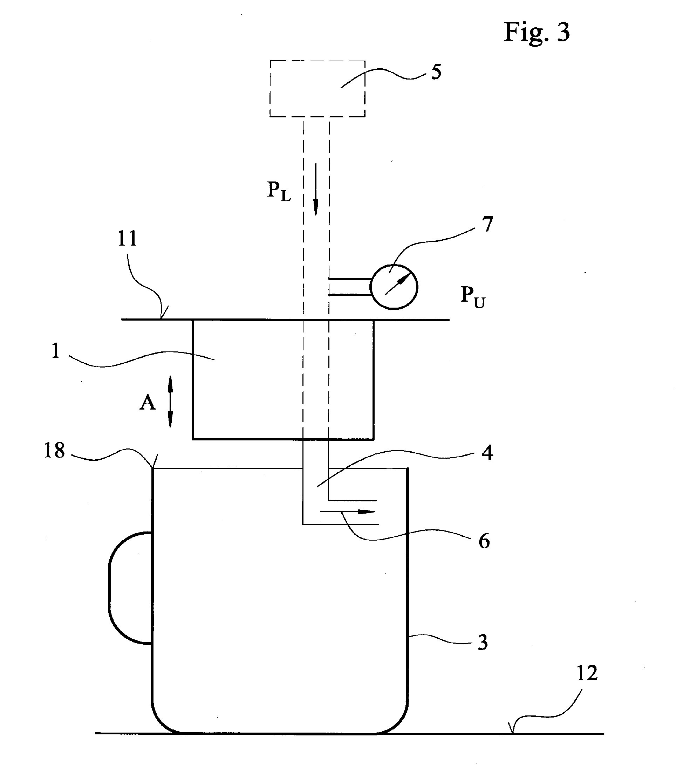

Aus der Figur 3 geht eine ähnliche, schematisch stark vereinfachte Darstellung einer Möglichkeit der Detektierung eines Gefäßes mit Hilfe eines Luftstrahls hervor. Hierbei ist das Gefäß 3 auf der Abstellfläche 12 des Getränkeautomaten 2 abgestellt. Das Gefäß 3 weist dabei einen Gefäßrand 18 auf. Wird die Ausgabeeinheit 1 vertikal nach unten bewegt und damit aus dem Vorbau 11 herausgefahren, so wird mit der Ausgabeeinheit 1 auch die daran angeordnete Druckluftausgabeeinrichtung 4 in gleicher Richtung bewegt. Die möglichen Bewegungsrichtungen der Ausgabeeinheit 1 und der Druckluftausgabeeinrichtung 4 sind in der Figur 3 durch den Doppelpfeil "A" gekennzeichnet. Mit Hilfe einer Drucklufterzeugungsvorrichtung 5, bei der es sich vorliegend ebenfalls um einen Kompressor handelt, wird ein Luftstrahl 6 erzeugt, der einen Druck p_{L} aufweist, der größer ist, als der Luftdruck p_{U} der Umgebung. In oder an der Druckluftausgabeeinrichtung 4 ist ferner ein Messwertaufnehmer 7 in Form eines Drucksensors angeordnet, der permanent den Druck p_{L} des Luftstrahls 6 misst. Durch ein Hindernis, wie es das Gefäß 3 darstellt, wird der Druck p_{L} verändert, so dass sich auch der durch den Drucksensor 7 gemessene Druck verändert. Dieser nunmehr erfasste und abweichende Wert stellt ein Signal für ein vorhandenes Hindernis dar, das für die Abschaltung des Antriebs der Ausgabeeinheit 1 nach einem Staudruckprinzip genutzt wird.

Bei dieser Ausführungsvariante ist auch ein permanenter Abgleich des momentan erfassten Istwertes mit einem Sollwert möglich.

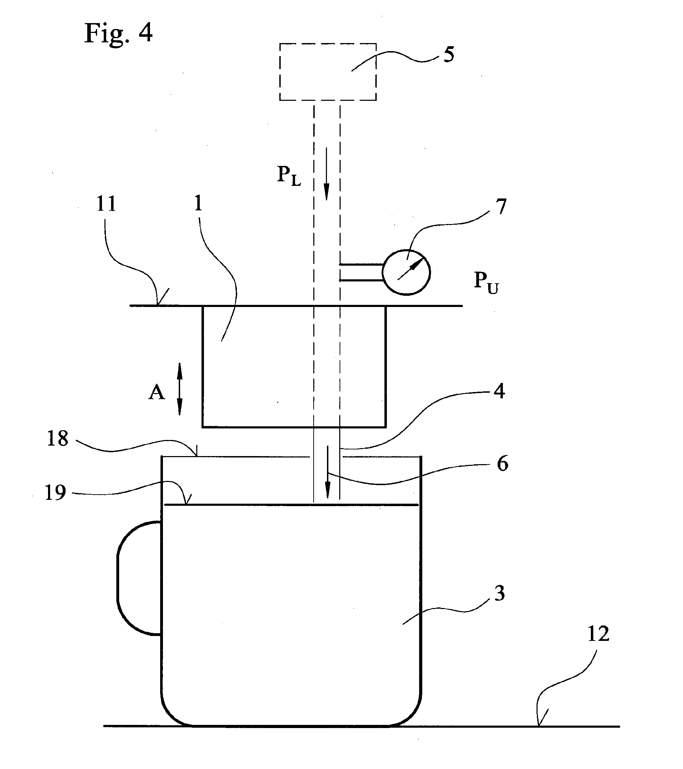

Die Figur 4 veranschaulicht hingegen in einer schematisch stark vereinfachten Darstellung eine Detektierung des Füllstandes eines auf der Abstellfläche 12 abgestellten Gefäßes 3 mit Hilfe eines Luftstrahls 6. Auch dieser Luftstrahl 6 wird durch eine Drucklufterzeugungsvorrichtung 5 bereitgestellt und weist einen Luftdruck p_{L} auf, der größer ist als der Luftdruck p_{U} der Umgebung. Die Erfassung des Druckes p_{L} des Luftstrahls 6 erfolgt hierbei ebenfalls mit Hilfe eines Messwertaufnehmers 7, der in oder an der Druckluftausgabeeinrichtung 4 vorhanden ist. Im vorliegenden Fall wird im Unterschied zu der zuvor beschriebenen Ausführung jedoch nicht das Gefäß 3, sondern der Füllstand des Gefäßes 3 erfasst, weshalb der Luftstrahl 6 auf den Flüssigkeitsspiegel 19 des in das Gefäß 3 eingebrachten Getränks gerichtet ist. Bei Erreichen eines vorgegebenen Druckes (Sollwert) im Bereich der Druckluftausgabeeinrichtung 4 stellt dies im vorliegenden Fall ein Signal für die vollständige Befüllung des Gefäßes 3 mit dem Getränk dar. Mit anderen Worten wird so lange ein Getränk in das Gefäß 3 gefüllt, wie der Istwert des durch den Messwertaufnehmer 7 erfassten Druckes p_{L} geringer ist, als ein im Speicher des Getränkeautomaten abgelegter Sollwert, was letztlich im messtechnischen Sinne eine Regelung darstellt. Gemessen wird hierbei wiederum der Staudruck, der in diesem Fall durch den Flüssigkeitspegel 19 erfassbar wird.

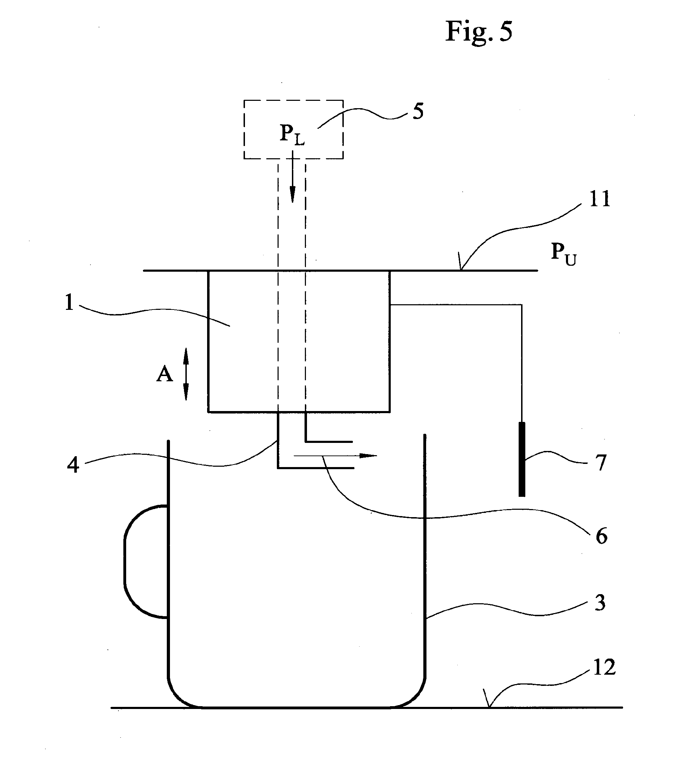

Im Zusammenhang mit der Darstellung in Figur 5 wird ein weiteres Prinzip der Detektierung eines unter der Ausgabeeinheit 1 abgestellten Gefäßes 3 mit Hilfe eines Luftstrahls 6 in stark vereinfachter Weise gezeigt. Die Ausgabeeinheit 1 kann auch bei dieser Variante automatisch in Richtung des Doppelpfeils "A" verstellt und damit aus dem Vorbau 11 heraus oder in den Vorbau 11 hinein bewegt werden. Zusammen mit der Ausgabeeinheit 1 wird auch die Druckluftausgabeeinrichtung 4 bewegt, die der Abgabe des Luftstrahls 6 dient. Der Luftstrahl 6 weist einen von der Drucklufterzeugungsvorrichtung 5 bereitgestellten Druck p_{L} auf, der wie bei den zuvor beschriebenen Beispielen größer ist, als der Luftdruck p_{U} der Umgebung. Im Unterschied zu den zuvor beschriebenen Ausführungsvarianten eines Getränkeautomaten basiert die Lösung gemäß der Figur 5 auf einer Unterbrechung des Luftstrahls 6. Hierbei wird ein mit der Bewegung der Ausgabeeinheit 1 mitbewegter Messwertaufnehmer 7 in Form eines Drucksensors verwendet, der permanent mit dem Druck p_{L} des Luftstrahls 6 beaufschlagt wird und damit ein konstantes Signal abgibt, solange dieser Luftstrahl 6 nicht durch ein unterhalb der Ausgabeeinheit 1 abgestelltes Gefäß 3 abgedeckt wird. Dabei ist zu beachten, dass der Messwertaufnehmer 7 sich außerhalb des Bereiches befindet, in dem das Gefäß 3 abgestellt werden kann. Folglich besteht hierbei ein Abstand zwischen der Austrittsöffnung der Druckluftausgabeeinrichtung 4 und dem Messwertaufnehmer 7. Wird also die Ausgabeeinheit 1 zusammen mit der daran vorhandenen Druckluftausgabeeinrichtung 4 nach unten, in Richtung des Gefäßes 3 bewegt, erfasst der Messwertaufnehmer 7 permanent ein konstantes Drucksignal des Luftstrahls 6. Erst wenn die Druckluftausgabeeinrichtung 4 in den Bereich des Gefäßes 3 gelangt, wird der Luftstrahl 6 abgelenkt beziehungsweise unterbrochen und das am Messwertaufnehmer 7 detektierte Signal ändert sich, was zur Abschaltung des Antriebs der Ausgabeeinheit 1 genutzt wird.

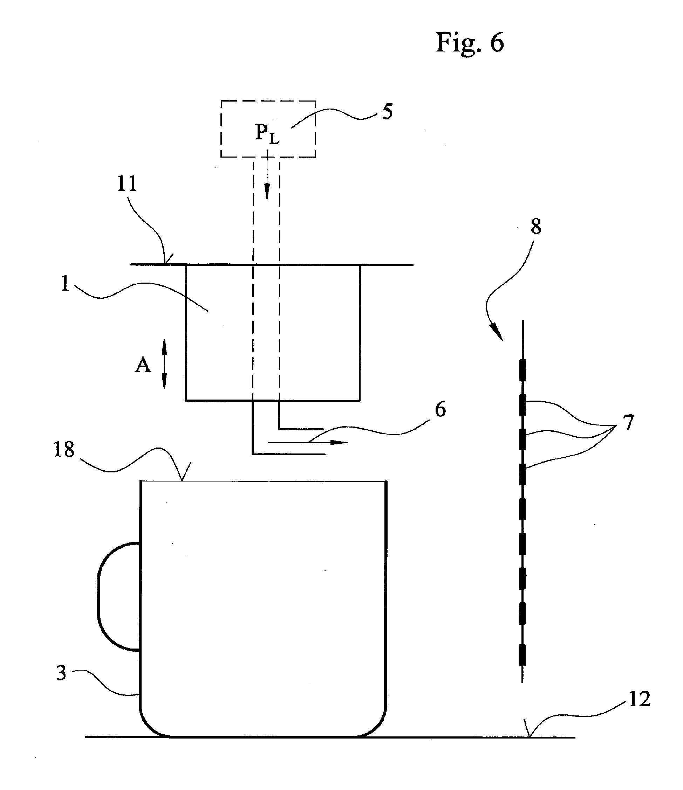

Eine andere Variante dieser Lösung geht aus der Figur 6 hervor. Hierbei wird in einem möglichst nicht sichtbaren Bereich des Getränkeautomaten eine Sensorplatine 8 mit einer Vielzahl darauf angeordneter Messwertaufnehmer 7 angeordnet. Die in Richtung des Doppelpfeils "A" bewegbare Ausgabeeinheit 1 wird beispielsweise aus dem Vorbau 11 nach unten, in Richtung des Gefäßes 3 bewegt. Hierbei werden die Messwertaufnehmer 7 der Reihe nach mit dem Druck p_{L} des Luftstrahls 6 beaufschlagt, der auch bei diesem Beispiel höher ist, als der Luftdruck p_{U} der Umgebung. Mit der Anströmung der einzelnen Messwertaufnehmer 7 lässt sich exakt die momentane Position der Ausgabeeinheit 1 bestimmen und messtechnisch erfassen. Eine geeignete Schaltungselektronik innerhalb des Getränkeautomaten dient dabei der Erfassung der Bewegungsrichtung sowie der Position der Ausgabeeinheit 1. Damit kann jedoch auch bestimmt werden, welcher der Messwertaufnehmer 7 als nächstfolgender mit dem Luftstrahl 6 beaufschlagt wird. Bleibt das erwartete Signal jedoch aus, bedeutet dies, dass der Gefäßrand 18 des Gefäßes 3 erreicht wurde und das Gefäß 3 den Luftstrahl 6 abdeckt. Folglich kann das Ausbleiben des Signals an diesem Messwertaufnehmer 7 dazu genutzt werden, den Antrieb der Ausgabeeinheit abzuschalten. Wird das Gefäß 3 von der Abstellfläche 12 entnommen, erfolgt eine Beaufschlagung des entsprechenden Messwertaufnehmers 7 mit einem Drucksignal, so dass der nunmehr erfasste Messwert für die erneute Aktivierung und Einleitung der Gegenbewegung der Ausgabeeinheit 1 genutzt werden kann. Mit anderen Worten wird in diesem Fall die Ausgabeeinheit 1 wieder nach oben, also in Richtung des Vorbaus 11 bewegt.

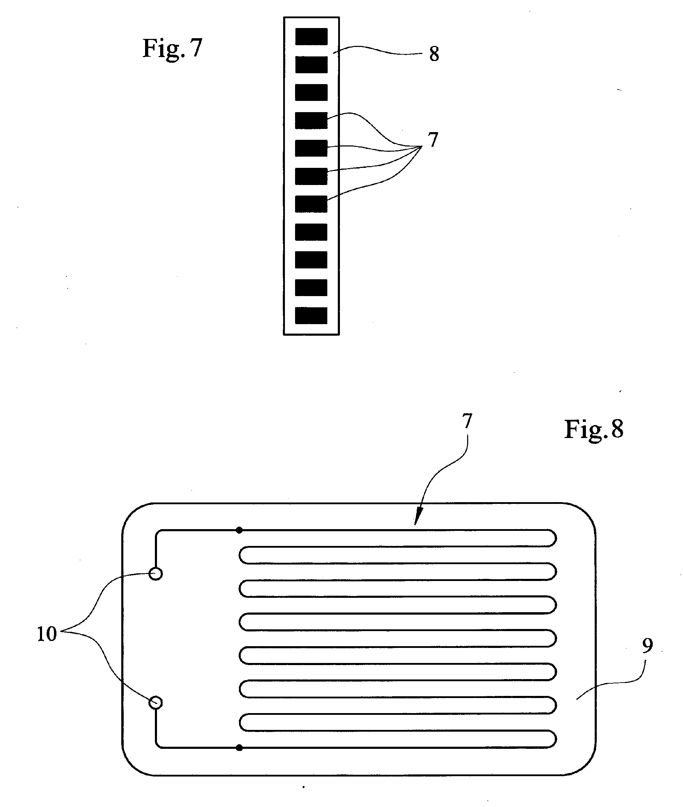

Die Figur 7 zeigt eine Möglichkeit der Anordnung der Messwertaufnehmer 7 auf einer Sensorplatine 8, wie sie beispielsweise in einer Ausführung zum Einsatz kommen kann, die im Zusammenhang mit der Beschreibung der Figur 6 erläutert wurde. Die Messwertaufnehmer 7 sind hierbei in einer Reihe übereinander angeordnet und weisen einen geringen Abstand zueinander auf, so dass die Messgenauigkeit einer derartigen Sensorplatine 8 sehr hoch ist.

Damit durch die erfindungsgemäße Lösung eine physikalische Größe beziehungsweise die Änderung einer physikalischen Größe infolge der Beaufschlagung mit einem Luftstrahl 6 erfassbar ist, besteht auch die Möglichkeit, die Erwärmung eines elektrischen Widerstandes dazu zu nutzen, die exakte Position der Ausgabeeinheit 1 zu erfassen. Ein derartiger elektrischer Widerstand ist beispielhaft in der Figur 8 gezeigt. Hierbei wurde auf einer Leiterkarte 9 eine aus Kupfer bestehende Leiterschlaufe mäanderförmig, das heißt, in einer Vielzahl Windungen Verlegt. Zum Anschluss an einen elektrischen Stromkreis dienen hierbei Anschlusskontakte 10 auf der Leiterkarte 9. Wird nun an den Anschlusskontakten 10 ein elektrischer Strom angelegt, so erwärmt sich der Leiter bis zu einer konstanten Temperatur, so dass ein stabiler, konstanter Zustand eintritt. Die Abkühlung des als Messwertaufnehmer 7 ausgelegten Leiters durch den Luftstrahl 6 der sich bewegenden Ausgabeeinheit 1 mit der daran angeordneten Druckluftausgabeeinrichtung 4 stellt hierbei ein Signal bereit, das für die Aktivierung des Antriebs der Ausgabeeinheit 1 genutzt werden kann. Tritt der Luftstrahl 6 in den Bereich des Gefäßes 3 ein, so erfolgt keine Abkühlung des Messwertaufnehmers 7 auf der Leiterkarte 9, was in diesem Fall in Form einer Widerstandsänderung des Messwertaufnehmers 7 und damit als auswertbares Signal für die Abschaltung des Antriebs der Ausgabeeinheit 1 nutzbar ist.

Vorteilhaft kann hierbei auch eine Regelung des Messwertaufnehmers 7 durch eine Messung des temperaturabhängigen Widerstandes auf eine konstante Temperatur oberhalb der Umgebungstemperatur sein. Das Vorhandensein beziehungsweise die Intensität des Luftstromes 6 ist dann über die nachzuführende elektrische Leistung messbar, die zum Ausgleich der Wärmeverluste bei unterschiedlichen Luftströmen erforderlich ist.

### BEZUGSZEICHENLISTE:

- 1: Ausgabeeinheit
- 2: Getränkeautomat
- 3: Gefäß
- 4: Druckluftausgabeeinrichtung
- 5: Drucklufterzeugungsvorrichtung
- 6: Luftstrahl
- 7: Messwertaufnehmer
- 8: Sensorplatine
- 9: Leiterkarte
- 10: Anschlusskontakte
- 11: Vorbau
- 12: Abstellfläche
- 13: Abtropfblech
- 14: Öffnungen oder Schlitze
- 15: Nische
- 16: Seitenwand
- 17: Entnahmeeinrichtung
- 18: Gefäßrand
- 19: Flüssigkeitsspiegel
- p_{L}: Druck der Drucklufterzeugungsvorrichtung
- p_{U}: Umgebungsluftdruck

## Patentansprüche

1. Getränkeautomat mit einer automatisch in der Höhe verstellbaren Ausgabeeinheit (1), unter der wenigstens ein zur Befüllung mit einem in dem Getränkeautomaten (2) erzeugten Getränk geeignetes Gefäß (3) abstellbar ist,
**dadurch gekennzeichnet, dass**
der Getränkeautomat (2) eine Druckluftausgabeeinrichtung (4) zur gerichteten Abgabe eines mittels einer Drucklufterzeugungsvorrichtung (5) erzeugten Luftstrahls (6) aufweist, wobei der Druck (p_{L}) des Luftstrahls (6) größer als der Umgebungsluftdruck (p_{U}) ist und korrespondierend zu der Druckluftausgabeeinrichtung (4) mindestens ein Messwertaufnehmer (7) zur Erfassung einer während des Absenkens der Ausgabeeinheit (1) von dem Luftstrahl (6) erzeugten physikalischen Größe vorhanden ist.

2. Getränkeautomat nach Anspruch 1,
**dadurch gekennzeichnet, dass**
die physikalische Größe ein Druck, eine Temperatur, eine Geschwindigkeit oder ein Impuls ist.

3. Getränkeautomat nach einem der vorstehend genannten Ansprüche,
**dadurch gekennzeichnet, dass**
der Messwertaufnehmer (7) zur Erfassung der durch Reflektion des Luftstrahls (6) erzeugten Staudruckes, zur Erfassung der Unterbrechung des Luftstrahls (6), zur Erfassung einer Temperaturänderung durch den Luftstrahl (6) oder zur Erfassung einer durch den Luftstrahl (6) erzeugten Drehzahl geeignet ist.

4. Getränkeautomat nach einem der vorstehend genannten Ansprüche,
**dadurch gekennzeichnet, dass**
der Messwertaufnehmer (7) ein Drucksensor, ein Strömungssensor, ein Temperatursensor oder eine Drehzahlmesseinrichtung ist.

5. Getränkeautomat nach einem der vorstehend genannten Ansprüche,
**dadurch gekennzeichnet, dass**
die Druckluftausgabeeinrichtung (4) mit der Ausgabeeinheit (1) in der Höhe verstellbar ausgeführt ist.

6. Getränkeautomat nach einem der vorstehend genannten Ansprüche,
**dadurch gekennzeichnet, dass**
eine Mehrzahl Messwertaufnehmer (7) äquidistant zu der Druckluftausgabeeinrichtung (4) angeordnet ist.

7. Getränkeautomat nach einem der vorstehend genannten Ansprüche,
**dadurch gekennzeichnet, dass**
die Drucklufterzeugungsvorrichtung (5) zusammen mit der Ausgabeeinheit (1) aktivierbar ist.

8. Getränkeautomat nach einem der vorstehend genannten Ansprüche,
**dadurch gekennzeichnet, dass**
die Ausgabeeinheit (1) pneumatisch oder elektromotorisch verstellbar ist.

9. Getränkeautomat nach einem der vorstehend genannten Ansprüche,
**dadurch gekennzeichnet, dass**
der von der Drucklufterzeugungsvorrichtung (5) erzeugte und mittels der Druckluftausgabeeinrichtung (4) abgegebene Luftstrahl (6) und korrespondierend hierzu der mindestens eine Messwertaufnehmer (7) zur Erfassung einer während des Absenkens der Ausgabeeinheit (1) von dem Luftstrahl (6) erzeugten physikalischen Größe, zur Erfassung des Füllstandes des Gefäßes (3) nutzbar ist.

## Claims

1. Beverage machine comprising an dispensing unit (1), the height of which can be automatically adjusted and beneath which at least one container (3), which is suitable for filling with a beverage made in the beverage machine (2), can be placed, **characterised in that** the beverage machine (2) comprises a compressed-air dispensing device (4) for the targeted output of an air jet (6) produced by a compressed-air generating apparatus (5), the pressure (p_{L}) of the air jet (6) being greater than atmospheric pressure (p_{U}) and, corresponding to the compressed-air dispensing device (4), at least one transducer (7) being present for detecting a physical variable produced by the air jet (6) as the dispensing unit (1) is lowered.

2. Beverage machine according to claim 1, **characterised in that** the physical variable is a pressure, a temperature, a speed or a pulse.

3. Beverage machine according to any of the preceding claims, **characterised in that** the transducer (7) is suitable for detecting the dynamic pressure produced when the air jet (6) is reflected, for detecting when the air jet (6) has been interrupted, for detecting a change in temperature through the air jet (6) or for detecting a rotational speed produced by the air jet (6).

4. Beverage machine according to any of the preceding claims, **characterised in that** the transducer (7) is a pressure sensor, a flow sensor, a temperature sensor or a rotational speed measuring device.

5. Beverage machine according to any of the preceding claims, **characterised in that** the compressed-air dispensing device (4), together with the dispensing unit (1), is designed to be height-adjustable.

6. Beverage machine according to any of the preceding claims, **characterised in that** a plurality of transducers (7) are arranged equidistantly from the compressed-air dispensing device (4).

7. Beverage machine according to any of the preceding claims, **characterised in that** the compressed-air generating apparatus (5), together with the dispensing unit (1), is activatable.

8. Beverage machine according to any of the preceding claims, **characterised in that** the dispensing unit (1) can be adjusted pneumatically or by means of an electric motor.

9. Beverage machine according to any of the preceding claims, **characterised in that** the air jet (6) produced by the compressed-air generating apparatus (5) and output by means of the compressed-air dispensing device (4) and, corresponding thereto, the at least one transducer (7) for detecting a physical variable produced by the air jet (6) as the dispensing unit (1) is lowered can be used to detect the fill level of the container (3).

## Revendications

1. Distributeur automatique de boissons, avec une unité de distribution (1) réglable automatiquement en hauteur, sous laquelle peut être posé au moins un récipient (3) approprié pour être rempli d'une boisson produite dans le distributeur automatique de boissons (2),
**caractérisé en ce que**
le distributeur automatique de boissons (2) présente un dispositif de distribution d'air comprimé (4) destiné à la fourniture dirigée d'un jet d'air (6) produit au moyen d'un dispositif de production d'air comprimé (5), la pression (p_{L}) du jet d'air (6) étant supérieure à la pression de l'air ambiant (pu) et, d'une façon correspondant au dispositif de distribution d'air comprimé (4), au moins un transducteur (7) destiné à la détection d'une grandeur physique produite par le jet d'air (6) pendant l'abaissement de l'unité de distribution (1) étant présent.

2. Distributeur automatique de boissons selon la revendication 1,
**caractérisé en ce que**
la grandeur physique est une pression, une température, une vitesse ou une impulsion.

3. Distributeur automatique de boissons selon l'une des revendications citées précédemment,
**caractérisé en ce que**
le transducteur (7) est adapté pour la détection de la pression dynamique produite par la réflexion du jet d'air (6), pour la détection de l'interruption du jet d'air (6), pour la détection d'une variation de température par le jet d'air (6) ou pour la détection d'une vitesse de rotation produite par le jet d'air (6).

4. Distributeur automatique de boissons selon l'une des revendications citées précédemment,
**caractérisé en ce que**
le transducteur (7) est un capteur de pression, un capteur d'écoulement, un capteur de température ou un dispositif de mesure de la vitesse de rotation.

5. Distributeur automatique de boissons selon l'une des revendications citées précédemment,
**caractérisé en ce que**
le dispositif de distribution d'air comprimé (4) est réalisé de façon réglable en hauteur avec l'unité de distribution (1).

6. Distributeur automatique de boissons selon l'une des revendications citées précédemment,
**caractérisé en ce**
**qu'**une pluralité de transducteurs (7) est disposée de façon équidistante au dispositif de distribution d'air comprimé (4).

7. Distributeur automatique de boissons selon l'une des revendications citées précédemment,
**caractérisé en ce que**
le dispositif de production d'air comprimé (5) peut être activé conjointement avec l'unité de distribution (1).

8. Distributeur automatique de boissons selon l'une des revendications citées précédemment,
**caractérisé en ce que**
l'unité de distribution (1) peut être réglée de façon pneumatique ou par moteur électrique.

9. Distributeur automatique de boissons selon l'une des revendications citées précédemment,
**caractérisé en ce que**
le jet d'air (6) produit par le dispositif de production d'air comprimé (5) et fourni au moyen du dispositif de distribution d'air comprimé (4) et, d'une façon correspondante à cet effet, le transducteur (7) au moins au nombre de un peuvent être utilisés pour la détection d'une grandeur physique produite par le jet d'air (6) pendant l'abaissement de l'unité de distribution (1), pour la détection du niveau de remplissage du récipient (3).
